# EUROPEAN PATENT SPECIFICATION

(11) **EP 3 311 911 B1**
(45) Date of publication and mention of the grant of the patent: **11.03.2020**
(21) Application number: 17188385.3
(22) Date of filing: 29.08.2017
(51) Int. Cl.: B01J 8/04

(54) **FUEL REFORMING DEVICE**
KRAFTSTOFFREFORMIERUNGSVORRICHTUNG
DISPOSITIF DE REFORMAGE DE COMBUSTIBLE

(30) Priority: 21.10.2016 KR 20160137661
(43) Date of publication of application: 25.04.2018
(73) Proprietor: LG Electronics Inc., Seoul 07336 (KR)
(72) Inventor: WOO, Hyoungsuk, 08592 Seoul (KR); RYU, Choonjae, 08592 Seoul (KR); YANG, Dongkeun, 08592 Seoul (KR)
(74) Representative: Ter Meer Steinmeister & Partner

(56) References cited:
- WO-A1-2014/063191
- NOBUHIRO MARUOKA ET AL: "Development of PCM Reactor for Methane Steam Reforming", ISIJ INTERNATIONAL, vol. 50, no. 9, 30 April 2010 (2010-04-30) , pages 1305-1310, XP055449066, JP ISSN: 0915-1559, DOI: 10.2355/isijinternational.50.1305

## Description

### BACKGROUND OF THE INVENTION

### 1. Field of the Invention

The present invention relates to a fuel reforming device that generates hydrogen by reforming a hydrocarbon based raw material.

### 2. Background of the Invention

Generally, a fuel reforming device is a kind of a reformer that generates hydrogen by reforming a raw gas such as LNG and LPG, and is widely known as steam reforming device.

Steam reforming device includes a steam reformer for shifting a raw gas to hydrogen, a shift reactor [high temperature shift reactor (HTS) and low temperature shift reactor (LTS)] for shifting carbon monoxide (CO) generated with hydrogen to carbon dioxide (CO₂) to lower concentration of the carbon monoxide, and a burner for supplying calories.

For example, if LNG of which main component is CH₄ is a raw gas, LNG is reacted with steam in the steam reformer, whereby hydrogen and carbon dioxide are generated. However, if carbon monoxide flows into a fuel cell stack, the stack is contaminated by carbon monoxide, whereby performance of the stack may be degraded seriously. Therefore, carbon monoxide generated through the steam reformer is shifted to carbon dioxide by using the HTS and the LTS.

In this case, an operation temperature in the steam reformer is different depending on a type of a catalyst. If Ni is used as a catalyst, the operation temperature is generally in the range of 600°C to 700°C, and this reaction is an endothermic reaction and calories required for this endothermic reaction are supplied using a burner. An operation temperature in the shift reactor is also different depending on the type of the catalyst, wherein the operation temperature is generally in the range of 300°C to 420°C in case of a high temperature shift reactor based on Cu-Zn, and is generally in the range of 235°C to 300°C in case of a low temperature shift reactor based on Fe-Cr. This shift reaction is an exothermic reaction and radiates heat during reaction.

Meanwhile, a fuel processing device of the conventional art may be categorized into a horizontal (or radial) fuel processing device and a longitudinal (or vertical) fuel processing device depending on arrangement of a steam reformer and a shift reactor.

In the horizontal fuel processing device, a steam reformer is arranged inside while a shift reactor is arranged outside. A combustion chamber provided with a burner is arranged inside the steam reformer, that is, at the innermost of the fuel processing device. In this horizontal fuel processing device, a combustion gas generated during combustion supplies heat to the steam reformer by upwardly passing through a path between the steam reformer and the combustion chamber, and then is discharged out. At this time, a raw gas downwardly moves by passing through the steam reformer and then is reformed while upwardly moving by passing through the shift reactor, whereby the raw gas is supplied to a fuel cell stack.

In the aforementioned horizontal fuel processing device of the conventional art, when the steam reformer is re-actuated after being stopped, it needs much time to reach an operation temperature in view of property of the steam reformer operated at high temperature. Therefore, problems occur in that the steam reformer is not re-actuated quickly and a system operation rate is degraded. Particularly, since a temperature attenuation speed of the steam reforming (SR) which performs an endothermic reaction at a relatively high temperature is faster than that of the shift reactor during stop, much more time is required to reach the operation temperature during re-actuation.

Also, a temperature of an exhaust gas generated from the burner during combustion is reduced after heat exchange, whereby a problem occurs in that a temperature gradient is increased at the end of the steam reformer and thus reaction deviation per position occurs seriously.

Nobuhiro Maruoka ET AL: "Development of PCM Reactor for Methane Steam Reforming", ISIJ INTERNATIONAL, vo. 50, no. 9, 1 January 2010 (2010-01-01), pages 1305-1310, XP055449066, JP ISSN: 0915-1559, DOI: 10.2355/isijinernational.50.1350 describes the experimental investigation of methane steam reformer using waste heat stored in a phase changing material. Temperature changes at various points were monitored for batch-wise conditions of turning off and on the burner in order to simulate industrial gas discharged from the batch process. The results demonstrate that the waste heat can be utilized for generating hydrogen by using latent heat storage.

### SUMMARY OF THE INVENTION

Therefore, an object of the present invention is to substantially obviate one or more problems due to limitations and disadvantages of the related art.

Another object of the present invention is to provide a fuel reforming device that may reduce time required to reach an operation temperature during re-actuation of a steam reformer (reforming reactor) to increase a system operation rate by quickly re-actuating the steam reformer.

Other object of the present invention is to provide a fuel reforming device that increase a reforming effect by lowering a temperature gradient per position of a reactor.

The object is solved by the features of the independent claims. Preferred embodiments are given in the dependent claims.

To achieve these and other advantages and in accordance with the purpose of the invention, as embodied and broadly described herein, a fuel reforming device comprises a combustion part where a burner is installed; an exhaust part through which an exhaust gas generated from the combustion part is circulated; and a reactor provided near the combustion part and/or the exhaust part, generating hydrogen from a raw material by absorbing heat from the exhaust gas passing through the combustion part and the exhaust part, wherein the reactor is provided with a heat storage member that absorbs heat during operation of the combustion part and stores the absorbed heat therein to provide heat required by the reactor to the reactor.

In this case, the heat storage member is provided with a phase change portion constituting a phase change material inside a surface portion, the phase change portion being made of a material having a melting temperature lower than that of the surface portion and/or latent heat higher than that of the surface portion.

The surface portion may be made of Cu, and/or the phase change portion may be made of Al alloy.

The fuel reforming device further comprises a temperature controller for maintaining a temperature of the heat storage member.

The temperature controller includes a plurality of temperature sensors installed along a moving direction of the exhaust gas, detecting a temperature of the reactor.

The temperature controller includes a controller controlling an operation of the burner by comparing temperatures detected by the temperature sensors with the melting temperature of the heat storage member.

The controller controls the burner to allow the lowest one of the temperatures detected by the temperature sensors to be maintained to be higher than the melting temperature of the heat storage member.

The heat storage member is formed in a shape of a plurality of balls filled in the reactor.

The reactor is provided with a splitter for splitting the reactor into two or more spaces, and the heat storage member is arranged at the two or more spaces of the reactor.

Any one of an inner circumference or an outer circumference of the splitter may be fixed to an inner circumference or an outer circumference of the reactor.

The splitter may include a plurality of splitters arranged at certain intervals along a length direction of the reactor, and adjacent splitters of the plurality of splitters are fixed to each other in a zigzag shape.

The inner circumference and the outer circumference of the splitter may be spaced apart from the inner circumference and the outer circumference of the reactor.

The splitter may be arranged between the inner circumference and the outer circumference of the reactor along a length direction to allow the reactor to be split into an inner circumference space and an outer circumference space.

The splitter may be provided with a plurality of gas through holes.

The splitter is made of a material of which melting temperature is higher than that of the heat storage member.

The reactor may be filled with a catalytic member together with the heat storage member.

In another aspect of the present invention, to achieve these and other advantages and in accordance with the purpose of the invention, a fuel reforming device comprises a combustion part where a burner is installed; an exhaust part through which an exhaust gas generated from the combustion part is circulated; a reactor provided near the combustion part or the exhaust part, generating hydrogen from a raw material by absorbing heat from the exhaust gas passing through the combustion part and the exhaust part; a heat storage member provided in the reactor, absorbing heat during operation of the combustion part and storing the absorbed heat therein to provide heat required for the reactor to the reactor; a plurality of temperature sensors installed in the reactor along a moving direction of the exhaust gas, detecting a temperature of the reactor; and a controller controlling an operation of the burner by comparing temperatures detected by the temperature sensors with a melting temperature of the heat storage member.

In the fuel reforming device according to the present invention, a reforming reactor may be maintained at a proper temperature even in a state that an operation of the fuel reforming device or a fuel cell system that includes the fuel reforming device is stopped. As a result, the fuel reforming device that includes the reforming reactor may quickly reach the operation temperature by using latent heat of the heat storage member during re-actuation of the fuel reforming device or the fuel cell system that includes the fuel reforming device.

Also, in this case, the possibility of hydrogen generation in the fuel reforming device may be increased, whereby efficiency of the fuel cell system may be increased.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view illustrating a broken section of a fuel reforming device according to one embodiment of the present invention;
FIG. 2 is a longitudinal sectional view illustrating a reforming reactor of a fuel reforming device according to FIG. 1;
FIG. 3 is a sectional view taken along line "I-I" of FIG. 2;
FIG. 4 is an enlarged view illustrating a portion "A" of FIG. 3 to describe an inner structure of a heat storage member;
FIG. 5a is a sectional view illustrating another example of an inner structure of a reforming reactor according to FIG. 1;
FIG. 5b is an enlarged perspective view illustrating a portion "B" of FIG. 5a;
FIGS. 6 to 8b are longitudinal sectional views and horizontal sectional views illustrating examples of a reforming reactor according to the present invention;
FIG. 9 is a block diagram illustrating a temperature controller of the fuel reforming device according to the present invention; and
FIG. 10 is brief views illustrating a heat storage process in a fuel reforming device according to the present invention.

### DETAILED DESCRIPTION OF THE INVENTION

Hereinafter, a fuel reforming device according to one embodiment of the present invention will be described in detail with reference to the accompanying drawings.

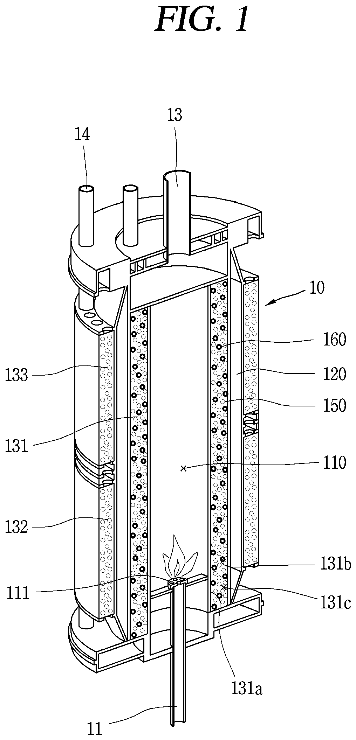

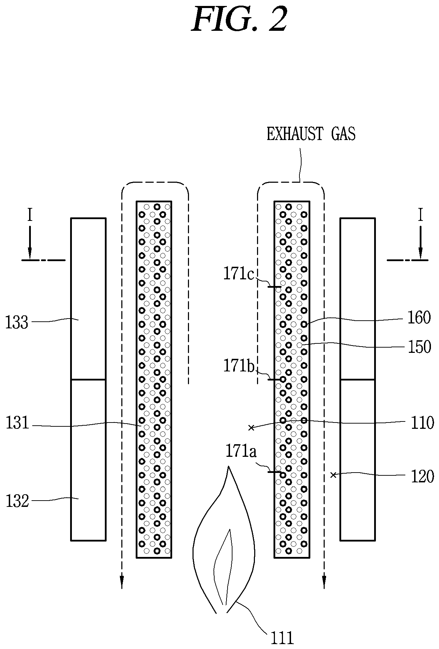

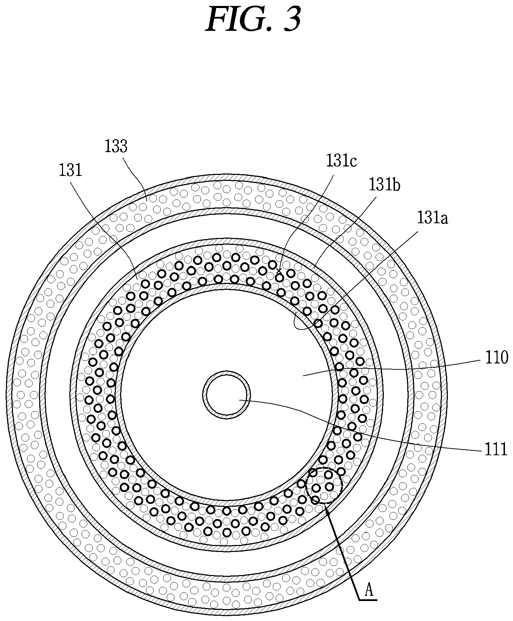

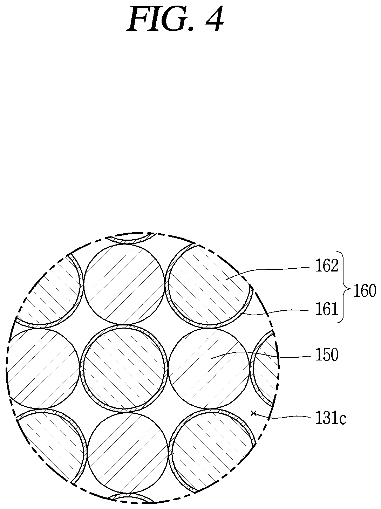

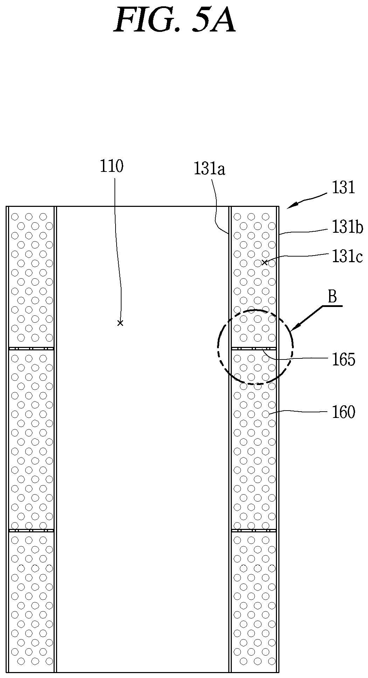

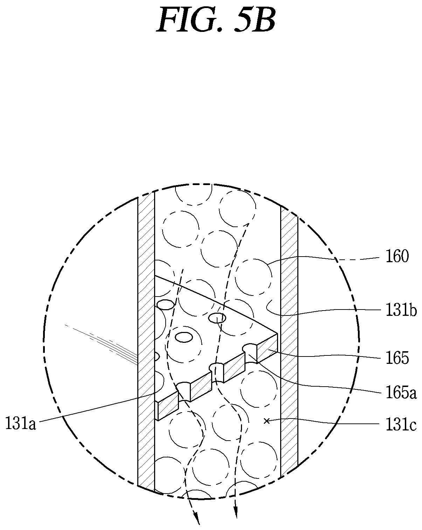

FIG. 1 is a perspective view illustrating a broken section of a fuel reforming device according to one embodiment of the present invention, FIG. 2 is a longitudinal sectional view illustrating a reforming reactor of a fuel reforming device according to FIG. 1, FIG. 3 is a sectional view taken along line "I-I" of FIG. 2, FIG. 4 is an enlarged view illustrating a portion "A" of FIG. 3 to describe an inner structure of a heat storage member, FIG. 5a is a sectional view illustrating another example of an inner structure of a reforming reactor according to FIG. 1, FIG. 5b is an enlarged perspective view illustrating a portion "B" of FIG. 5a, and FIGS. 6 to 8b are longitudinal sectional views and horizontal sectional views illustrating examples of a reforming reactor according to the present invention.

Referring to FIGS. 1 to 3, the fuel reforming device according to the embodiment of the present invention comprises a casing 10 longitudinally formed and sealed with an insulation wall therein, a combustion chamber 110 provided along a length direction of the casing 10 at the center inside the casing 10, and a burner 111 provided inside the combustion chamber 110, generating heat by combusting gas. The combustion chamber 110 and the burner 111 constitute a combustion part.

A combustion gas injection inlet 11 may be provided below the casing 10 to inject a gas, which will be combusted by the burner 111, into the combustion chamber 110. A reactant inlet 13 for injecting a reactant toward a reforming reactor 131, which will be described later, may be formed at the top of the casing 10, and a reactant outlet 14 for discharging a reactant out by passing through each of reactors 131, 132 and 133, which will be described later, may be provided at the lower end of the casing 10.

The burner 111 may be installed below the combustion chamber 110. A Bunsen burner which acquires a high temperature by combusting a combustion gas or a metal fiber which uses a combustion gas or the atmospheric air as a fuel may be used as burner 111. In this case, the metal fiber is more efficient than the Bunsen burner in that it may generate a high heat value due to a short flame, and has advantages in that it is easy to control load and has a wide flame range.

The combustion chamber 110 is arranged at the center of the casing 10, and a reactor portion for generating hydrogen from a raw gas is installed outside the combustion chamber 110. The reactor portion generates 3H₂+CO if a catalyst and a high temperature are applied to CH₄ and H₂O to generate a chemical reaction. Since CO may cause the atmospheric pollution, CO is shifted to CO₂ by a chemical reaction with H₂O.

The reactor portion may include a reforming reactor 131 installed inside, and shift reactors 132 and 133 installed outside. That is, the reforming reactor 131 and the shift reactors 132 and 133 are formed in a cylindrical shape, whereby the reforming reactor 131 may be installed to surround the combustion chamber 110, and the shift reactors 132 and 133 may be installed to surround the reforming reactor 131.

An exhaust path 120 which communicates with the combustion chamber 110 to constitute a discharge path of an exhaust gas generated during combustion may be formed between the reforming reactor 131 and the shift reactors 132 and 133. Therefore, the exhaust gas generated in the combustion chamber 110 may supply heat to the reforming reactor 131 while moving to the top of the casing 10, and may again supply heat to the reforming reactor 131 and the shift reactors 132 and 133 while moving to the lower side of the casing 10 by passing through a space between the reforming reactor 131 and the shift reactors 132 and 133 through the exhaust path 120.

The reforming reactor 131 is formed in a cylindrical shape having a predetermined space 131c between an inner wall 131a and an outer wall 131b, and a catalytic material 150 for expediting a reaction of a raw gas may be filled in the space 131c. Ni is generally used as the catalytic material 150 in the reforming reactor 131, whereby a reaction temperature of the reforming reactor 131 is in the range of 600°C to 700°C.

In this case, the catalytic material 150 may be formed in such a manner that a plurality of catalytic materials are attached to a plate shaped metal member (not shown), or may be formed in a shape of a plurality of balls. In this embodiment, since a phase change material (PCM) 160 which will be described later is formed in a shape of ball and then filled in the space 131c of the reforming reactor 131 together with the catalytic material 150, it is preferable that the catalytic material 150 is formed in a shape of ball. However, as the case may be, the catalytic material 150 may be formed in such a manner that a plurality of catalytic materials are attached to a plate shaped metal member as described above, whereby the catalytic materials may be filled in the space 131c of the reforming reactor 131 by rolling and the phase change material 160 according to this embodiment may be filled between the catalytic materials 150 by loading.

The phase change material 160 is filled in the space 131c of the reforming reactor 131 (or shift reactor) and serves to provide heat required for a reforming reaction during re-actuation of the fuel reforming device after storing heat absorbed from the exhaust gas therein. Hereinafter, the phase change material 160 may be referred to as a heat storage member.

The heat storage member 160 may be formed in a shape of ball as described above.

Also, the entire of the heat storage member 160 may be formed of the same material, but in this case, the heat storage member 160 may be restricted with respect to a peripheral temperature. That is, if the peripheral temperature is higher than a reactor temperature, the heat storage member 160 may not be maintained as its shape during phase change, whereby loss may be generated. Therefore, it may be preferable that the heat storage member 160 according to this embodiment is formed to allow a phase change material to be built in its covering which is able to relatively withstand a high temperature.

For example, as shown in FIG. 4, the heat storage member 160 according to this embodiment may include a surface portion 161 constituting covering, and a phase change portion 162 filled in the surface portion 161, constituting a kind of a phase change material.

The phase change portion 162 may be made of a material of which melting temperature (or phase change temperature) is lower than that of the surface portion 161 and latent heat is higher than that of the surface portion 161.

In this case, the surface portion 161 may be made of a Cu material of which heat conductivity is excellent. For reference, a phase change temperature (melting temperature) of Cu is 1100°C, approximately, and its latent heat value is 200(kJ/kg), approximately.

Also, the phase change portion 162 may be made of Al Alloy generating phase change at a temperature similar to a reforming reaction temperature, more exactly Al-Si. For reference, a phase change temperature of AL-Si is 550°C, and a latent heat value of Al-Si is 200(kJ/kg), which shows a temperature zone similar to that of the reforming reactor.

Meanwhile, if the heat storage member 160 is formed in a shape of ball and filled in the space 131c of the reforming reactor, the heat storage member 160 may be tilted downwardly while moving between the catalytic materials 150. In this case, temperature gradient per position of the reforming reactor 131 is generated, whereby it may be difficult to maintain a uniform reaction temperature.

Considering this, in this embodiment as shown in FIG. 5a, a splitter 165 for splitting the heat storage member 160 per layer may be formed at the space 131c of the reforming reactor 131. Although one splitter 165 may be formed at the center of the space 131c, a plurality of splitters may be formed per layer up and down as the case may be.

Also, the plurality of splitters 165 may be formed at the position where heights of the respective layers become equal to one another, but may be formed at the position where heights of the respective layers become different from one another depending on a condition. For example, if the heat storage members 160 are formed to have the same diameter, the splitters 165 may be formed at the position where the heights of the respective layers become equal to one another, to uniformly maintain temperatures of the respective layers. However, if the heat storage members 160 are formed to have different diameters (surface areas), the splitters 165 may be formed in such a manner that a height of a layer where the heat storage member having a relatively great surface area is arranged becomes low, whereas a height of a layer where the heat storage member having a relatively small surface area is arranged become high.

As a result, even though the ball shaped heat storage members 160 move between the plurality of catalytic members formed in a shape of ball or a shape similar to the ball, the heat storage members 160 may be arranged by being distributed uniformly along a height direction without being tilted downwardly. Therefore, a temperature per position of the reforming reactor 131 may be maintained uniformly, whereby a reforming effect may be improved.

Also, although the splitters 165 may be formed in a shape of plate having no holes to split both layers, the splitters 165 may be provided with a plurality of gas through holes 165a may be formed to allow a raw gas to actively pass therethrough as shown in FIG. 5b.

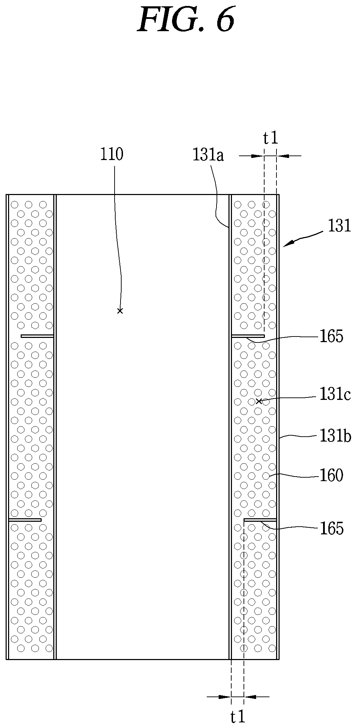

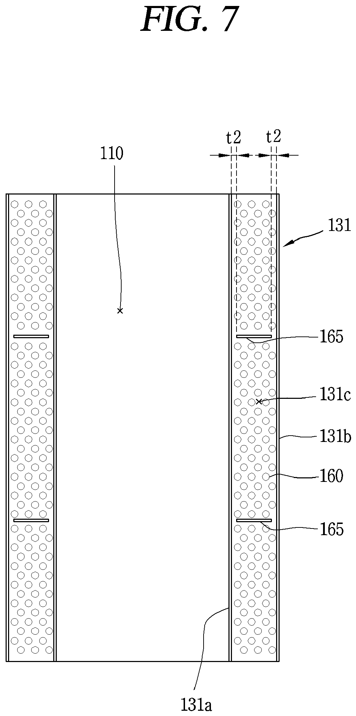

In this case, if the splitters 165 are formed in a shape of plate having no holes, it may be preferable that a width sectional area of the splitter 165 is smaller than that of the reforming reactor 131 to generate a certain interval t1 or t2 between an outer circumference of the inner wall 131a of the reforming reactor 131 and an inner circumference of the splitters 165 or between an inner circumference of the outer wall 131b of the reforming reactor 131 and an outer circumference of the splitters 165, as shown in FIGS. 6 and 7, whereby the raw gas may pass through the splitters 165. If the gas through holes 165a are formed in the splitters 165 as shown in FIG. 5b, it may be preferable that the gas through holes 165a are formed at a great size if possible within the range that the catalytic members 150 or the heat storage members 160 do not get out of them.

Also, the splitters 165 may be fixed to the inner circumference or the outer circumference of the reforming reactor 131. In this case, it may be preferable that the splitters 165 are fixed to the inner circumference or the outer circumference of the reforming reactor 131 in a zigzag shape as shown in FIG. 6 considering loading of the catalytic members 150 or the heat storage members 160. However, the splitters 165 may not be fixed to the inner wall 131a or the outer wall 131b of the reforming reactor 131. In this case, in a state that the splitters 165 are manufactured in advance as shown in FIG. 7, the splitters 165 may be arranged at proper positions by being inserted into the center at certain intervals during loading of the catalytic members 150 or the heat storage members 160.

Also, although the splitters 165 may be formed in a ring shape to adapt to the shape of the space 131c of the reforming reactor 131, the splitters 165 may be formed in an arc shape as the case may be.

Also, in view of stability, it may be preferable that the splitters 165 are formed of a material having a melting temperature higher than that of the heat storage members 160.

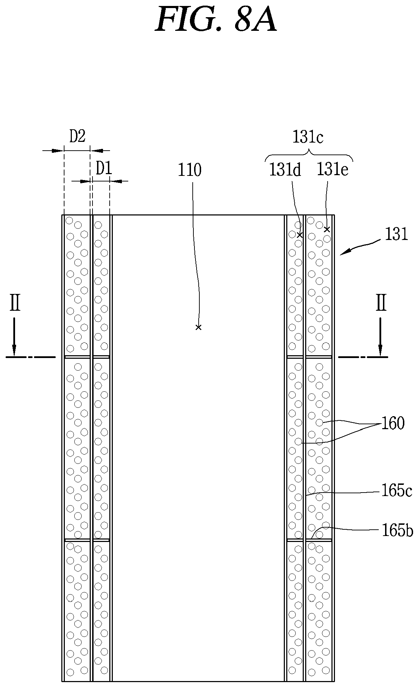

Also, although the splitters 165 may be arranged at certain intervals in a height direction (length direction) of the reforming reactor 131, in addition to horizontal splitters 165b, a vertical splitter 165c may further be provided between the inner wall 131a and the outer wall 131b of the reforming reactor 131 as shown in FIG. 8a, whereby the space 131c may be split into the inner circumference and the outer circumference in a horizontal direction. If the vertical splitter 165c is provided, although the heat storage members 160 arranged in an inner circumference space 131d and an outer circumference space 131e may be loaded at the same specification as much as the same amount, the heat storage members 160 may be loaded in the inner circumference space 131d and the outer circumference space 131e at different specifications as much as different amount.

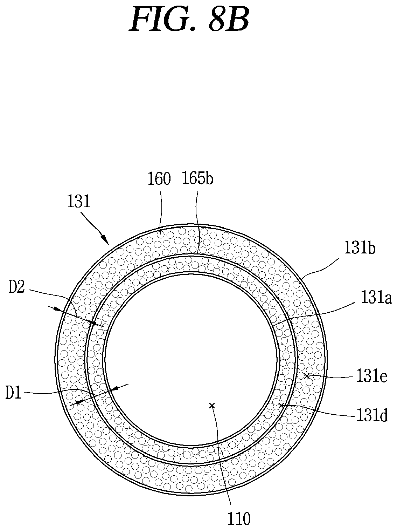

For example, as shown in FIGS. 8a and 8b, a width D1 of the inner circumference space 131d may be smaller than a width D2 of the outer circumference space 131e. That is, considering that the exhaust gas first contacts the inner circumference space 131d, the inner circumference space 131d may be arranged in such a manner that an entire surface area of the heat storage members 160 arranged in the outer circumference space 131e is greater than an entire surface area of the heat storage members 160 arranged in the inner circumference space 131d based on the same circumference length. As a result, even though the temperature of the outer circumference space 131e is increased more slowly than the temperature of the inner circumference space 131d during re-actuation of the reforming reactor 131, since the surface area of the heat storage members 160 arranged in the outer circumference space 131e is greater than that of the heat storage members 160 arranged in the inner circumference space 131d, more heat may be supplied from the heat storage member 160 to the outer circumference space 131e, whereby the outer circumference space 131e may reach an operation temperature similarly to the inner circumference space 131d.

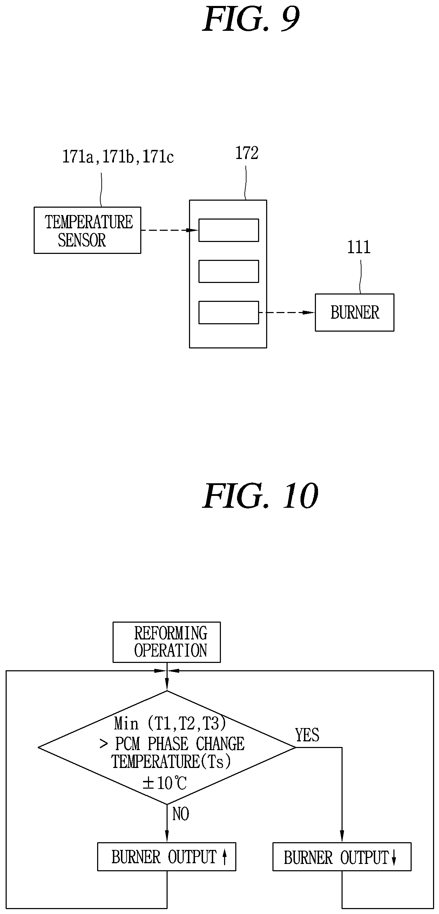

Meanwhile, in this embodiment, a temperature controller for appropriately supplying heat required for phase change of the heat storage members may further be provided to use latent heat of the heat storage members. FIGS. 9 and 10 are brief views illustrating a heat storage process in a fuel reforming device according to the present invention.

According to the invention the temperature controller includes temperature sensors 171a to 171c for detecting a temperature of the reforming reactor 131, and a controller 172 for controlling an operation of the burner 111 by comparing the temperature detected from the temperature sensors 171a to 171c with a set temperature, as shown in FIGS. 2 and 9.

Meanwhile, in this embodiment, a temperature controller for appropriately supplying heat required for phase change of the heat storage members may further be provided to use latent heat of the heat storage members. FIGS. 9 and 10 are brief views illustrating a heat storage process in a fuel reforming device according to the present invention.

According to the invention the temperature controllerincludes temperature sensors 171a to 171c for detecting a temperature of the reforming reactor 131, and a controller 172 for controlling an operation of the burner 111 by comparing the temperature detected from the temperature sensors 171a to 171c with a set temperature, as shown in FIGS. 2 and 9.

A plurality of the temperature sensors 171a to 171c may be arranged on the inner circumference or the outer circumference of the reforming reactor 131 in a length direction (up and down) at proper intervals along a moving direction of the exhaust gas. For reference, in FIG. 2, the temperature sensors 171a to 171c are arranged on the inner circumference of the reforming reactor 131 at three stages.

The controller 172 may include an input module 172a electrically connected with the plurality of temperature sensors 171a to 171c, receiving detection temperatures from the temperature sensors 171a to 171c, a determination module 172b determining whether to operate the burner 111 by comparing the detection temperatures T1, T2 and T3 input to the input module 172a with a set temperature Ts, and an output module 172c transmitting an operation signal or a stop signal to the burner 111 in accordance with the result determined by the determination module 172b.

The determination module 172b may transmit the operation signal to the output module 172c to operate the burner 111 if the detection temperatures T1, T2 and T3 are lower than the set temperature Ts, whereas the determination module 172b may transmit the stop signal to the output module 172c to maintain a stopped state of the burner 111 if the detection temperatures T1, T2 and T3 are higher than the set temperature Ts.

In this case, a specific temperature, that is, a phase change temperature of the phase change portion 162 may be defined as the set temperature Ts, or a temperature greater than or smaller than the phase change temperature within a certain range may be defined as the set temperature Ts. Also, a temperature obtained by adding or subtracting a specific temperature to or from the phase change temperature may be defined as the set temperature Ts.

Also, if the plurality of temperature sensors 171a to 171c are provided, that is, the plurality of detection temperatures T1 to T3 are provided, a temperature detected from any one of the temperature sensors may be defined as the detection temperature or an average temperature of temperatures detected from the plurality of temperature sensors may be defined as the detection temperature.

For example, if the three temperature sensors 171a to 171c are provided at a lower stage, a middle stage and an upper stage of the reforming reactor, the temperature sensors 171a to 171c of the respective stages detect a temperature of the reforming reactor 131 per stage, and the lowest detection temperature of the temperature sensors 171a to 171c may be compared with the set temperature to determine whether the burner should be operated.

In this case, the set temperature Ts may be a temperature obtained by adding a tolerance temperature (10°C in the drawing) to the phase change temperature of the heat storage member 160. Therefore, the detection temperatures T1 to T3 are compared with the set temperature Ts, and as a result, if the detection temperature is higher than the set temperature, it is determined that latent heat through phase change of the heat storage member 160 may be used even by the current temperature of the reforming reactor, whereby the burner 111 may be maintained at a stopped state or its heating power may be lowered. On the other hand, if the detection temperature is lower than the set temperature, since the current heat storage member 160 cannot use latent heat, the burner 111 may be operated or its heating power may be enhanced, whereby the phase change portion of the heat storage member 160 may generate phase change.

Meanwhile, in the aforementioned embodiment, after the temperature of the reforming reactor is detected in real time using the temperature sensor, it is determined whether to operate the burner in accordance with the detected result. However, in another embodiment, the burner may be operated per fixed time using a timer without a separate temperature sensor, whereby the heat storage member may maintain a phase change temperature.

Therefore, the reforming reactor may be maintained at a proper temperature even in a state that the operation of the fuel reforming device or the fuel cell system that includes the fuel reforming device is stopped. As a result, the fuel reforming device that includes the reforming reactor may quickly reach the operation temperature by using latent heat of the heat storage member during re-actuation of the fuel reforming device or the fuel cell system that includes the fuel reforming device. In this case, the possibility of hydrogen generation in the fuel reforming device may be increased, whereby efficiency of the fuel cell system may be increased.

## Claims

1. A fuel reforming device comprising:
a combustion part (110, 11);
a burner (111) installed in the combustion part (110, 11);
an exhaust part (120) through which an exhaust gas generated from the combustion part (110, 11) is discharged; and
a reactor (131, 132, 133) provided near the combustion part (110, 11) or the exhaust part (120), generating hydrogen from a raw material by absorbing heat from the exhaust gas passing through the combustion part (110, 11) or the exhaust part (120), wherein the reactor (131, 132, 133) is a steam-reformer, wherein the reactor (131, 132, 133) is provided with a heat storage member (160) that absorbs heat during operation of the combustion part (110, 11) and stores the absorbed heat therein to provide heat required by the reactor to the reactor (131, 132, 133),
wherein the heat storage member (160) is formed in a shape of a plurality of balls filled in the reactor (131, 132, 133);
wherein the heat storage member (160) is provided with a phase change portion (162) constituting a phase change material inside a surface portion (161), the phase change portion (162) being made of a material having a melting temperature lower than that of the surface portion (161) and/or latent heat higher than that of the surface portion (161),
wherein the reactor (131) is provided with at least one splitter (165) for splitting the reactor (131) into two or more spaces, and the heat storage member (160) is arranged at the two or more spaces of the reactor, and
wherein the splitter (165) is made of a material of which melting temperature is higher than that of the heat storage member (160),
**characterized in that** the fuel reforming device further comprises a temperature controller for maintaining a temperature of the heat storage member (160),
wherein the temperature controller includes:
a plurality of temperature sensors (171a, 171b, 171c) installed along a moving direction of the exhaust gas, detecting a temperature of the reactor (131, 132, 133) and
a controller (172) controlling an operation of the burner (111) by comparing temperatures detected by the temperature sensors (171a, 171b, 171c) with the melting temperature of the heat storage member (160),
wherein the controller (172) is adapted to control the burner (111) to allow the lowest one of the temperatures detected by the temperature sensors (171a, 171b, 171c) to be maintained or to be higher than the melting temperature of the heat storage member (160).

2. The fuel reforming device of claim 1, wherein the surface portion (161) is made of Cu, and/or the phase change portion (162) is made of Al alloy.

3. The fuel reforming device of claim 1 or 2, wherein any one of an inner circumference or an outer circumference of the at least one splitter (165) is fixed to an inner circumference or an outer circumference of the reactor (131).

4. The fuel reforming device of any one of claims 1 to 3, wherein the splitter (165) includes a plurality of splitters arranged at certain intervals along a length direction of the reactor (131), and adjacent splitters (165) of the plurality of splitters are fixed to each other in a zigzag shape.

5. The fuel reforming device of claim 1 or 2, wherein an inner circumference and an outer circumference of the splitter (165) are spaced apart from an inner circumference and an outer circumference of the reactor (131).

6. The fuel reforming device of any one of claims 1 to 5, wherein the splitter (165) is arranged between an inner circumference and an outer circumference of the reactor (131) along a length direction to allow the reactor (131) to be split into an inner circumference space (131d) and an outer circumference space (131e).

7. The fuel reforming device of any one of claims 1 to 6, wherein the splitter (165) is provided with a plurality of gas through holes (165a).

8. The fuel reforming device of any one of claims 1 to 7, wherein the reactor (131) is filled with a catalytic member together with the heat storage member (160).

## Patentansprüche

1. Kraftstoffreformierungsvorrichtung, umfassend:
ein Verbrennungsteil (10, 11);
einen Brenner (111), der im Verbrennungsteil (110, 11) eingebaut ist;
ein Abgasteil (120), durch welches ein Abgas, das von dem Verbrennungsteil (110, 11) erzeugt wird, ausgespeist wird; und
einen Reaktor (131, 132 133), der in der Nähe des Verbrennungsteils (110, 11) oder des Abgasteils (120) vorgesehen ist und der Wasserstoff aus einem Ausgangsstoff durch Absorbieren von Wärme aus dem Abgas, das durch das Verbrennungsteil (110, 11) oder das Abgasteil (120) strömt, erzeugt, wobei der Reaktor (131, 132, 133) ein Dampfreformer ist, wobei der Reaktor (131, 132, 133) mit einem Wärmespeicherelement (160) versehen ist, das Wärme während des Betriebs des Verbrennungsteils (110, 11) absorbiert und die absorbierte Wärme darin speichert, um Wärme, die von dem Reaktor benötigt wird, für den Reaktor (131, 132, 133) bereitzustellen,
wobei das Wärmespeicherelement (160) in Form einer Mehrzahl von Kugeln gebildet ist, die in den Reaktor (131, 132, 133) gefüllt sind;
wobei das Wärmespeicherelement (160) mit einem Phasenänderungsabschnitt (162) versehen ist, der ein Phasenänderungsmaterial innerhalb eines Oberflächenabschnitts (161) bildet, wobei der Phasenänderungsabschnitt (162) aus einem Material hergestellt ist, das eine Schmelztemperatur aufweist, die geringer als die des Oberflächenabschnitts (161) ist, und/oder eine latente Wärme, die höher ist als die des Oberflächenabschnitts (161),
wobei der Reaktor (131) mit wenigstens einem Teiler (165) zum Teilen des Reaktors (131) in zwei oder mehr Räume versehen ist und das Wärmespeicherelement (160) an den beiden oder mehr Räumen des Reaktors angeordnet ist, und
wobei der Teiler (165) aus einem Material hergestellt ist, dessen Schmelztemperatur höher als die des Wärmespeicherelements (160) ist,
**dadurch gekennzeichnet, dass** die Kraftstoffreformierungsvorrichtung ferner eine Temperatursteuerung zum Beibehalten einer Temperatur des Wärmespeicherelements (160) umfasst,
wobei die Temperatursteuerung umfasst:
eine Mehrzahl von Temperatursensoren (171a, 171b, 171c), die entlang einer Bewegungsrichtung des Abgases eingebaut sind und eine Temperatur des Reaktors (131, 132, 133) erfassen, und
eine Steuerung (172), die einen Betrieb des Brenners (111) durch Vergleichen von Temperaturen, die von den Temperatursensoren (171a, 171b, 171c) erfasst werden, mit der Schmelztemperatur des Wärmespeicherelements (160) steuert,
wobei die Steuerung (172) dazu ausgestaltet ist, den Brenner (111) zu steuern, um zu ermöglichen, dass die niedrigste der von den Temperatursensoren (171a, 171b, 171c) erfassten Temperaturen beibehalten wird oder höher ist als die Schmelztemperatur des Wärmespeicherelements (160).

2. Kraftstoffreformierungsvorrichtung nach Anspruch 1, wobei der Oberflächenabschnitt (161) aus Cu hergestellt ist und/oder der Phasenänderungsabschnitt (162) aus Al-Legierung hergestellt ist.

3. Kraftstoffreformierungsvorrichtung nach Anspruch 1 oder 2, wobei entweder ein innerer Umfang oder ein äußerer Umfang des wenigstens einen Teilers (165) an einem inneren Umfang oder einem äußeren Umfang des Reaktors (131) befestigt ist.

4. Kraftstoffreformierungsvorrichtung nach einem der Ansprüche 1 bis 3, wobei der Teiler (165) eine Mehrzahl von Teilern umfasst, die in bestimmten Abständen entlang einer Längsrichtung des Reaktors (131) angeordnet sind, und wobei benachbarte Teiler (165) der Mehrzahl von Teilern zickzackförmig aneinander befestigt sind.

5. Kraftstoffreformierungsvorrichtung nach Anspruch 1 oder 2, wobei ein innerer Umfang und ein äußerer Umfang des Teilers (165) von einem inneren Umfang und einem äußeren Umfang des Reaktors (131) beabstandet sind.

6. Kraftstoffreformierungsvorrichtung nach einem der Ansprüche 1 bis 5, wobei der Teiler (165) zwischen einem inneren Umfang und einem äußeren Umfang des Reaktors (131) entlang einer Längsrichtung angeordnet ist, um zu ermöglichen, dass der Reaktor (131) in einen inneren Umfangsraum (131d) und einen äußeren Umfangsraum (131e) geteilt wird.

7. Kraftstoffreformierungsvorrichtung nach einem der Ansprüche 1 bis 6, wobei der Teiler (165) mit einer Mehrzahl von Gasdurchtrittslöchern (165a) versehen ist.

8. Kraftstoffreformierungsvorrichtung nach einem der Ansprüche 1 bis 7, wobei der Reaktor (131) mit einem katalytischen Element zusammen mit dem Wärmespeicherelement (160) gefüllt ist.

## Revendications

1. Dispositif de reformage de combustible comprenant :
une partie combustion (110, 11) ;
un brûleur (111) installé dans la partie combustion (110, 11) ;
une partie échappement (120) à travers laquelle un gaz d'échappement généré par la partie combustion (110, 11) est déchargé ; et
un réacteur (131, 132, 133) disposé près de la partie combustion (110, 11) ou de la partie échappement (120), générant de l'hydrogène à partir d'une matière de départ par absorption de la chaleur provenant du gaz d'échappement passant à travers la partie combustion (110, 11) ou la partie échappement (120), le réacteur (131, 132, 133) étant un vaporeformeur, le réacteur (131, 132, 133) étant muni d'un élément de stockage de chaleur (160) qui absorbe de la chaleur pendant le fonctionnement de la partie combustion (110, 11) et stocke la chaleur absorbée dans celui-ci pour fournir la chaleur requise par le réacteur au réacteur (131, 132, 133),
l'élément de stockage de chaleur (160) étant façonné dans une forme d'une pluralité de billes introduites dans le réacteur (131, 132, 133) ;
l'élément de stockage de chaleur (160) comportant une partie de changement de phase (162) constituant un matériau à changement de phase à l'intérieur d'une partie de surface (161), la partie de changement de phase (162) étant faite d'un matériau ayant une température de fusion inférieure à celle de la partie de surface (161) et/ou une chaleur latente supérieure à celle de la partie de surface (161),
le réacteur (131) comportant au moins un séparateur (165) pour séparer le réacteur (131) en au moins deux espaces, et l'élément de stockage de chaleur (160) étant disposé aux deux espaces ou plus du réacteur, et
le séparateur (165) étant fait d'un matériau dont la température de fusion est supérieure à celle de l'élément de stockage de chaleur (160),
**caractérisé par le fait que** le dispositif de reformage de combustible comprend en outre un régulateur de température pour maintenir une température de l'élément de stockage de chaleur (160),
le régulateur de température comprenant :
une pluralité de capteurs de température (171a, 171b, 171c) installés le long d'une direction de déplacement du gaz d'échappement, détectant une température du réacteur (131, 132, 133), et
un dispositif de commande (172) commandant un fonctionnement du brûleur (111) par comparaison de températures détectées par les capteurs de température (171a, 171b, 171c) avec la température de fusion de l'élément de stockage de chaleur (160),
le dispositif de commande (172) étant apte à commander le brûleur (111) pour permettre à la température la plus basse des températures détectées par les capteurs de température (171a, 171b, 171c) d'être maintenue ou d'être supérieure à la température de fusion de l'élément de stockage de chaleur (160).

2. Dispositif de reformage de combustible selon la revendication 1, dans lequel la partie de surface (161) est faite de Cu et/ou la partie de changement de phase (162) est faite d'alliage d'Al.

3. Dispositif de reformage de combustible selon l'une des revendications 1 ou 2, dans lequel l'une quelconque d'une périphérie interne ou d'une périphérie externe dudit au moins un séparateur (165) est fixée à une périphérie interne ou une périphérie externe du réacteur (131).

4. Dispositif de reformage de combustible selon l'une quelconque des revendications 1 à 3, dans lequel le séparateur (165) comprend une pluralité de séparateurs disposés à certains intervalles le long d'une direction de la longueur du réacteur (131), et des séparateurs adjacents (165) de la pluralité de séparateurs sont fixés l'un à l'autre dans une forme de zigzag.

5. Dispositif de reformage de combustible selon l'une des revendications 1 ou 2, dans lequel une périphérie interne et une périphérie externe du séparateur (165) sont espacées d'une périphérie interne et d'une périphérie externe du réacteur (131).

6. Dispositif de reformage de combustible selon l'une quelconque des revendications 1 à 5, dans lequel le séparateur (165) est disposé entre une périphérie interne et une périphérie externe du réacteur (131) le long d'une direction de la longueur pour permettre au réacteur (131) d'être séparé en un espace de périphérie interne (131d) et un espace de périphérie externe (131e).

7. Dispositif de reformage de combustible selon l'une quelconque des revendications 1 à 6, dans lequel le séparateur (165) comporte une pluralité de trous traversants de gaz (165a).

8. Dispositif de reformage de combustible selon l'une quelconque des revendications 1 à 7, dans lequel le réacteur (131) est rempli par un élément catalytique conjointement avec l'élément de stockage de chaleur (160).
